(19)

Europäisches Patentamt
European Patent Office
Office européen des brevets

(11) EP 2 679 412 A1

(12) **EUROPEAN PATENT APPLICATION**

(43) Date of publication:
01.01.2014 Bulletin 2014/01

(51) Int Cl.:
B60C 23/04 $^{(2006.01)}$

(21) Application number: 12183935.1

(22) Date of filing: 11.09.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.06.2012 KR 20120070031

(71) Applicant: Samsung Electro-Mechanics Co., Ltd
Suwon
Gyunggi-do 443-743 (KR)

(72) Inventors:
• Han, Won
443-743 Gyunggi-do (KR)

• Song, Jong Hyeong
443-743 Gyunggi-do (KR)
• Lee, Kyung No
443-743 Gyunggi-do (KR)
• Hyun, Hae Seung
443-743 Gyunggi-do (KR)
• Han, Jong Woo
443-743 Gyunggi-do (KR)

(74) Representative: Heine, Christian Klaus
KNH Patentanwälte
Kahlhöfer Neumann Rößler Heine
Postfach 10 33 63
40024 Düsseldorf (DE)

(54) **Tire location distinction device and tire location distinction method using the same**

(57) There is provided a tire location discrimination device, including: a plurality of pressure gauges each measuring internal pressure of a plurality of tires; and an operation unit receiving and processing pressure signals each generated from the plurality of pressure gauges, respectively, according to curves of a road surface, wherein signals values or phase differences of the pressure signals are compared with each other by the operation unit to discriminate the tire locations.

EP 2 679 412 A1

**Description**

CROSS REFERENCE TO RELATED APPLICATION

This application claims the benefit of Korean Patent Application No. 10-2012-0070031, filed on June 28, 2012, entitled "Tire Location Distinction Device And Tire Location Distinction Method Using The Same," which is hereby incorporated by reference in its entirety into this application.

BACKGROUND OF THE INVENTION

1. Technical Field

The present invention relates to a tire location distinction device and a tire location distinction method using the same.

2. Description of the Related Art

A demand for an auto location (vehicle tire location) function for automatically discriminating locations of tires in a tire pressure monitoring system (TPMS) has been increased. The reason is that when a tire pressure is out of a normal level, it may inform a driver of which tire is out of a normal pressure.
In connection with this, many methods for mounting an auto location function in a TPMS are derived and a part thereof is applied to a real TPMS.
However, all the methods known up to now have disadvantages. For example, the methods have problems in that when performance is improved, installation costs are increased, when installation costs are reduced, accuracy of tire location recognition in an auto location function is degraded, and the like.
As more detailed example, there is a method of discriminating locations of tires by mounting low frequency (LF) transmitters around each tire wheel to analyze signals transmitted to a selectively specified tire pressure monitoring apparatus from the LF transmitters and RF signals transmitted from the TPMS sensor module in response to the analyzed signals.
The method can very accurately detect the locations of the tires but is troublesome in that signal lines are connected near each wheel while the LF transmitters need to be mounted. That is, the mounting cost of the system is increased.
Another method as described in US Patent 6725712 discriminates locations of tires using strength of a radio frequency (RF) signal transmitted an electronic control unit (ECU) from a general TPMS sensor module for discriminating a front and a rear of a tire. For example, if the ECU is mounted on a front bump of a vehicle, the tire is discriminated as a front tire when the strength of RF signal transmitted to the ECU is large and the tire is discriminated as a rear tire when the strength of the RF signal is small.
A problem of the method for discriminating the front/rear tires using the strength of the RF signal has a limitation in the mounting place of the ECU.
Describing in more detail, a vehicle is generally formed of metal materials and the RF signals are distorted by the metal materials of a vehicle. Here, when the ECU is mounted at places other than the front/rear bumps, there is a problem in that the method for discriminating the front/rear tires with the strength of the RF signal due to the distortion in the RF signal by a car body has reduced accuracy.
That is, when the mounting place of the ECU is limited to the front/rear bumps of a vehicle, a length of wirings may be more increased as compared with the case in which the ECU is mounted at other places and waterproofing, an impact resistant design, and the like, may be required. This may lead to the increase in the mounting costs of the system.
Further, since the front/rear bumps may be more frequently impacted as compared with other portions of a car body, the defects of the ECU may frequently occur.

[Prior Art Document]

[Patent Document]

(Patent Document 1) US Patent No. 6725712

SUMMARY OF THE INVENTION

The present invention has been made in an effort to provide a tire location distinction device and a tire location distinction method using the same capable of discriminating locations of tires and improving reliability of location distinction.

According to a preferred embodiment of the present invention, there is provided a tire location discrimination device, including: a plurality of pressure gauges each measuring internal pressure of a plurality of tires; and an operation unit receiving and processing pressure signals each generated from the plurality of pressure gauges, respectively, according to curves of a road surface, wherein signals values or phase differences of the pressure signals are compared with each other by the operation unit to discriminate the tire locations.

The pressure gauge may be configured of a TPMS sensor module.

The pressure gauge may include: a pressure sensor measuring the pressure; and a transmitting unit transmitting the pressure signals of the pressure sensors.

The operation unit may compare similarity between the pressure signals at the same time to discriminate locations of front and rear wheels of the tires.

The operation unit may group as similar groups the pressure signals in which a sign of values obtained by multiplying the pressure signals by each other is positive to discriminate the locations of the front and rear  wheels of the tires.

The operation unit may group as similar groups the pressure signals in which relative/absolute sizes of a sum of values obtained by multiplying the pressure signals by each other are large to discriminate the locations of the front and rear wheel of the tires.

The operation unit may compare the similarity between the pressure signals in consideration of a time delay between the front and rear wheels of the tires to discriminate the locations of the left and right wheels of the tire.

The operation unit may compare at least one of the pressure signals with signals of motion sensors mounted in a vehicle to discriminate at least one tire location and the locations of the pressure gauges from which the remaining pressure signals are generated, thereby discriminating the locations of the remaining tires.

The motion sensor may be configured of an acceleration sensor measuring acceleration signals corresponding to motions of the tires.

According to another preferred embodiment of the present invention, there is provided a tire location distinction method, including: measuring, by a plurality of pressure gauges, respectively, internal pressure of a plurality of tires; collecting and processing pressure signals generated from the plurality of pressure gauges, respectively, according to curves of a road surface; and comparing, by an operation unit, magnitudes or phases of the pressure signals with each other to discriminate the locations of the tires.

The discriminating of the locations of the tires may include: grouping, by the operation unit, as a plurality of similar groups signals having high similarity of the pressure signals at the same time; and comparing a time delay between front and rear wheels between the plurality of similar groups at the same time to discriminate locations of front and rear wheels of the tires.

In the grouping, pressure signals in which a sign of values obtained by multiplying the pressure signals by each other is positive may be  grouped as similar groups.

In the grouping, the pressure signals in which relative/absolute sizes of a sum of values obtained by multiplying the pressure signals by each other are large may be grouped as the similar groups.

The discriminating of the locations of the tires may include: grouping, by the operation unit, as the plurality of similar groups pressure signals having high similarity among the pressure signals in consideration of time differences between front and rear wheels; and comparing, by the operation unit, the plurality of similar groups with signals of acceleration sensors or angular velocity sensors to discriminate locations of left/right wheels of the tires.

In the grouping, the pressure signals in which a sign of values obtained by summing the pressure signals by each other is positive may be grouped as the similar groups.

In the grouping, the pressure signals in which relative/absolute sizes of values obtained by multiplying the pressure signals by each other may be grouped as the similar groups.

In the discriminating of the locations of the tires, the operation unit may compare at least one of the pressure signals with signals of motion sensors mounted in a vehicle to discriminate the location of at least one tire and automatically discriminate locations of the pressure gauges from which the remaining pressure signals are generated, thereby discriminating the locations of the remaining tires.

The motion sensor may be configured of an acceleration sensor measuring acceleration signals corresponding to motions of the tires.

The pressure gauge may be configured of a TPMS sensor module.

According to still another preferred embodiment of the present invention, there is provided a tire location distinction method, including: measuring, by a plurality of pressure gauges, respectively, internal pressure of a plurality of tires; collecting and processing pressure signals generated from the plurality of pressure gauges, respectively, according to curves of a road surface; performing grouping to discriminate signals  having high similarity between the pressure signals as a location of a front wheel or a rear wheel of the tires by allowing an operation unit to compare magnitudes and phases of the pressure signals at the same time and to discriminate signals having high similarity between the pressure signals as a location of a left wheel or a right wheel by allowing the operation unit to compare magnitudes or phases of the pressure signals in a time difference between the front and rear wheels; and comparing at least one of the pressure signals with signals of motion sensors mounted in a vehicle to discriminate a location of at least one tire and automatically discriminate locations of the remaining pressure signals.

BRIEF DESCRIPTION OF THE DRAWINGS

The above and other objects, features and advantages of the present invention will be more clearly understood from the following detailed description taken in conjunction with the accompanying drawings, in which:

FIG. 1 is a configuration diagram showing a tire location distinction device according to a preferred embodiment of the present invention;
FIG. 2 is a configuration diagram showing pressure gauges of the tire location distinction device according to the preferred embodiment of the present invention;
FIG. 3 is a cross-sectional view of the pressure gauges of the tire location distinction device according to the preferred embodiment of the present invention;
FIG. 4 is a conceptual diagram schematically showing a location distinction method using the tire location distinction device according to the preferred embodiment of the present invention;
FIG. 5 is a graph showing a signal for describing the location distinction method using the tire location distinction device according to the preferred embodiment of the present invention;
FIG. 6 is a graph showing a pressure change of each tire during a driving a vehicle in the location distinction method using the tire location distinction device according to the preferred embodiment of the present invention;
FIG. 7 is a flow chart showing a location distinction method of TPMS according to a preferred embodiment of the present invention;
FIG. 8 is a flow chart showing a location distinction process in the location distinction method of TPMS according to the preferred embodiment of the present invention;
FIG. 9 is a graph showing a case in which similarity between pressure signals is high in the location distinction method of TPMS according to the preferred embodiment of the present invention; and
FIG. 10 is a graph showing a case in which similarity between pressure signals is low in the location distinction method of TPMS according to the preferred embodiment of the present invention.

DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.
Hereinafter, preferred embodiments of the present invention will be described  in detail with reference to the attached drawings.

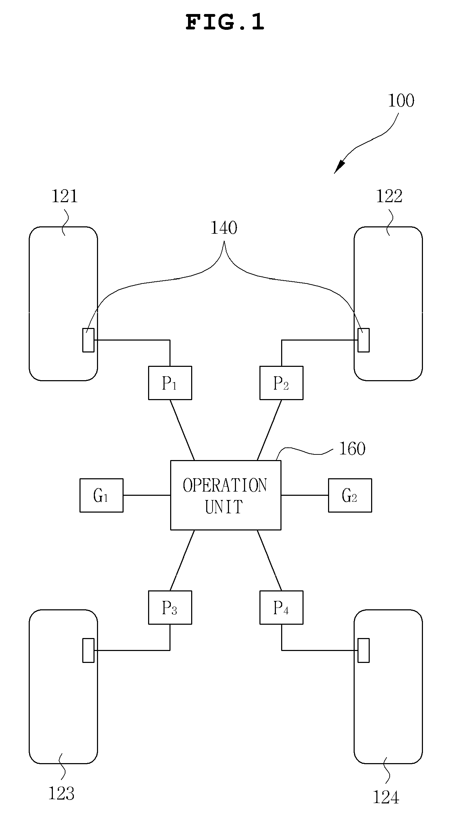

FIG. 1 is a configuration diagram showing a tire location distinction device according to a preferred embodiment of the present invention.
Referring to FIG. 1, a tire location distinction device 100 according to a preferred embodiment of the present invention includes pressure gauges 140 and a calculation unit 160 that discriminates a pressure signal detected by the pressure gauges 140 to discriminate locations of tires 121, 122, 123, and 124.

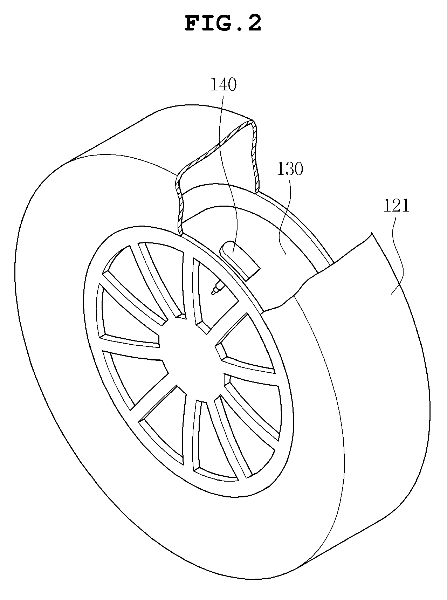

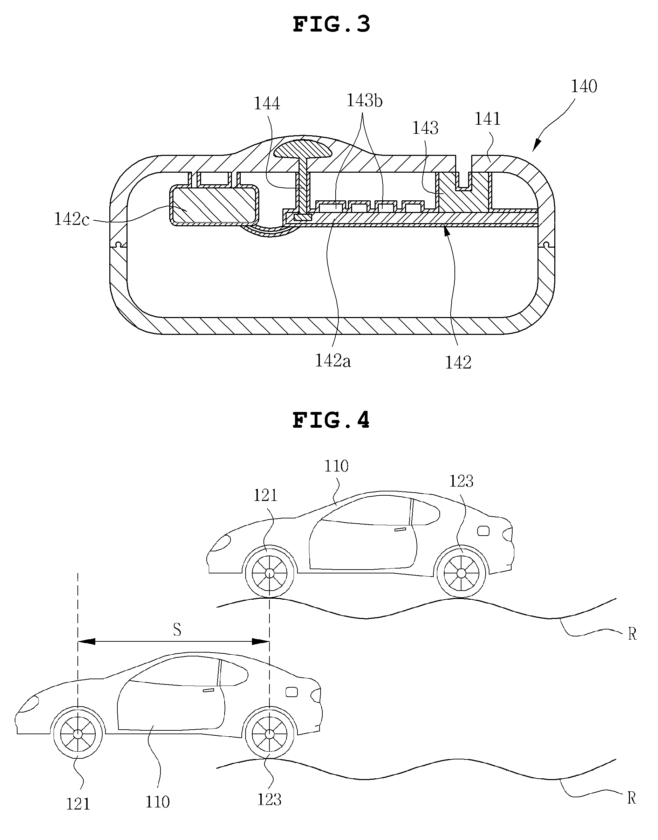

FIG. 2 is a configuration diagram showing pressure gauges of the tire location distinction device according to the preferred embodiment of the present invention and FIG. 3 is a cross-sectional view of the pressure gauges of the tire location distinction device according to the preferred embodiment of the present invention.
In addition, FIG. 4 is a conceptual diagram schematically showing a location distinction method using the tire location distinction device according to the preferred embodiment of the present invention.
Hereinafter, the tire location distinction device 100 according to the preferred embodiment of the present invention will be described in more detail with reference to FIGS. 1 to 6.
Referring first to FIGS. 1 to 4, the pressure gauges 140 measure an internal pressure of a plurality of tires 121, 122, 123, and 124, respectively, which are mounted in a vehicle 110.

Here, the tires 121, 122, 123, and 124 may be mounted in a body of the vehicle 110 and for example, may be mounted at the front, rear, left, and right tires of the vehicle 110.

In addition, the pressure gauges 140 are provided corresponding to the plurality of tires 121, 122, 123, and 124 and are mounted at the plurality of tires 121, 122, 123, and 124, respectively. In this case, referring to FIG. 2, the tire 121 covers a wheel 130 and the pressure gauges 140 are mounted at the wheels 130. However, the measured locations of the pressure gauges 140 according to the embodiment of the present invention are not necessarily limited thereto.

Further, referring to FIGS. 1 to 4, the pressure gauges 140 each measure the internal air pressure of the tires 121, 122, 123, and 124, respectively, that are mounted the front, rear, left, and right of the vehicle 110. In this case, the pressure gauges 140 may each measure the change in internal pressure of each tire 121, 122, 123, and 124 according to curves of a road surface R during a driving of a vehicle.

Further, referring to FIG. 3, the pressure gauge 140 may be configured of a TPMS sensor module that includes a pressure sensor 143 measuring an internal air pressure of the tires 121, 122, 123, and 124 and a transmitting unit 144 transmitting a pressure signal of the pressure sensor 143. In this configuration, the transmitting unit 144 may be configured to include an antenna transmitting the pressure signal.

Further, the pressure gauge 140 may further include a circuit unit 142 performing a control to transmit a value measured by the pressure sensor 143 as the pressure signal through the transmitting unit 144 and a case 141 accommodating the circuit unit 142. In this configuration, the circuit unit 142 includes a circuit board 142a, a circuit component 142b mounted on the circuit board 142a, and a battery 142c electrically connected with the circuit board 142a.

However, the configuration of the pressure gauge 140 according to the embodiment of the present invention is not necessarily limited thereto.

Referring to FIG. 1, an operation unit 160 receives and processes the pressure signals from the pressure gauges 140. In this configuration, the operation unit 160 includes a receiving unit (not shown) that receives the pressure signal transmitted from the transmitting unit 144 of the pressure gauge 140.

Further, the operation unit 160 collects and processing each pressure signal transmitted from the plurality of pressure gauges 140 that are mounted at the front, rear, left, and right tires 121, 122, 123, and 124, respectively.

Further, the operation unit 160 compares magnitudes or phases of the collected pressure signal to discriminate the locations of the tires 121, 122, 123, and 124.

In this case, the operation unit 160 groups signals having high similarity among the pressure signals. In this case, referring to FIGS, 1 and 4, among the pressure signals of the pressure gauges 140 each mounted at the plurality of tires 121, 122, 123, and 124 generated during a driving of a vehicle, the pressure signals of the front tires 121 and 122 and the pressure signals of the rear tires 123 and 124 have high similarity to each other. Therefore, the pressure signals generated from the pressure gauges 140 mounted at the front left and right tires 121 and 122 are grouped by the operation unit 160 and the pressure signals generated from the pressure gauges 140 mounted on the rear left and right tires 123 and 124 may be grouped as similar groups to each other.

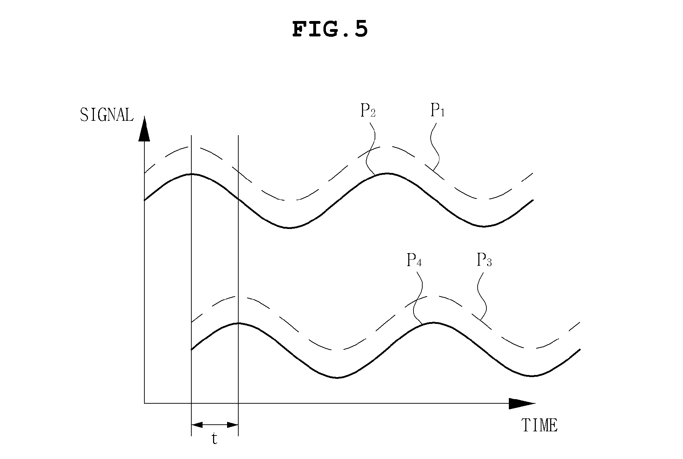

FIG. 5 is a graph showing a signal for describing the location distinction method using the tire location distinction device according to the preferred embodiment of the present invention.

Referring to FIG. 5, the air pressure between the front tires 121 and 122 and the rear tires 123 and 124 may be similar to each other due to the curves of the road surface during a driving of a vehicle. As a result, a pressure signal P1 of the front left tire 121 and a pressure signal P2 of the front right tire 122 are highly likely to have the same phase at the same time. Further, since a pressure signal P3 of the rear left tire 123 and a pressure signal P4 of the rear right tire 124 are highly likely to have the same phase at the same time, similarity between signal waveforms may be increased.

Describing in more detail, the pressure signals may be compared by increment values of the signals collected from the pressure gauges 140 that are located at each tire 121, 122, 123, and 124.

In this case, it may be discriminated that when a sign of values obtained by multiplying the pressure signals by each other for each time period is positive, the similarity between the signals is high and when a sign of values obtained by multiplying the pressure signals by each other is negative, the similarity between the signals is low.

For example, as the values of the pressure signal P1 and the pressure signal P2 have the same phase, when similarity of phase differences between the signals is high, it is highly likely to indicate the same sign values. As a result, the sign of the values obtained by multiplying the pressure signals by each other is positive.

In addition, as the values of the pressure signal P1 and the pressure signal P3 have different phases, when the similarity of the phase difference between the signals is low, it is highly likely to indicate sign values that are not the same. As a result, the sign of the values obtained by multiplying the pressure signals by each other is negative.

Meanwhile, it may be discriminated that as the relative/absolute sizes of the values obtained by summing the pressure signals with each other for each time period are large, the similarity between the signals is high and as the relative/absolute sizes thereof are small, the similarity between the signals is low.

For example, as the values of the pressure signal P1 and the pressure signal P2 have the same phase, when the similarity of a phase difference between the signals is high, it is highly likely to indicate the same sign value. As a result, the relative/absolute sizes of the values obtained by summing the pressure signals with each other are large. In addition, as the values of the pressure signal P1 and the pressure signal P3 have different phases, when the similarity of the phase difference between the signals is low, it is highly likely to indicate sign values that are not the same. As a result, the relative/absolute sizes of the values obtained by summing the pressure signals with each other are small.

Therefore, the pressure signals P1 and P2 of the front tires 121 and 122 may be grouped as the similar groups and the pressure signals P3 and P4 of the rear tires 123 and 124 may be grouped as the similar groups.

Meanwhile, when comparing the pressure signal P1 with the pressure signals P3 and P4 in consideration of a time delay between the front and rear tires, the similarity between the pressure signals P1 and P3 of the left tires 121 and 123 may be higher than the similarity between the pressure signal P1 of the front left tire 121 and the pressure signal P4 of the rear right tire 124.

Therefore, the pressure signals P1 and P3 may be grouped as a group for left and right discrimination and the pressure signals P2 and P4 may be grouped as another group for left and right discrimination.

In the grouping, since the pressure signals P1 and P2 and P3 and P4 are classified into a front wheel located at the front of the same vehicle or a rear wheel located at the rear of a vehicle and the pressure signals P1 and P3 and P2 and P4 are classified into a left wheel located at the left of the same vehicle or a right wheel located at the right of a vehicle, the locations of the tires can be discriminated by comparing only any one of the pressure signals P1, P2, P3, and P4 with motion signals of motion sensors mounted in the vehicle and thus, the locations of the tires can be automatically discriminated by the remaining pressure signals.

In this case, a specific location may be discriminated by comparing the pressure signals with the signals of the motion sensors that are mounted around the wheels of a vehicle. In this case, the motion sensors may be, for example, vertical acceleration sensors.

Further, the vertical acceleration sensors are each mounted at the left and right of a vehicle, respectively, and since the similarity is present between the changes in pressure of the tires 121, 122, 123, and 124, the change in load due to vertical vibration of a vehicle may discriminate whether any of the left and right pressure signals is a left or right signal by the similarity comparison when comparing the tire pressure signals with the signals of the vertical acceleration sensors.

The method using the motion sensors mounted in the vehicle as described above is several examples that can discriminate the pressure of the left or right of the tires 121, 122, 123, and 124 and the embodiments of the present invention are not limited thereto.

In addition, referring to FIGS. 4 and 5, when analyzing the similarity between the signals in consideration of a time delay + t and - t between the group of the pressure signals P1 and P2 and the group of the pressure signals P3 and P4, the signal of the time delay t and the value of the similarity between the signals can be detected and thus, the front/rear locations of the tires 121, 122, 123, and 124 can be discriminated.

Here, it can be appreciated that the time of the group of the pressure signals P3 and P4 of the rear left and right tires 123 and 124 is more delayed by t than that of the group of the pressure signals P1 and P2 of the front left and right tires 121 and 122.

Consequently, it may be discriminated that the group of the pressure signals P1 and P2 may be generated from the front tires 121 and 122 and the group of the pressure signals P3 and P4 is generated from the rear tires 123 and 124.

As described above, the tire location distinction device 100 according to the preferred embodiment of the present invention can easily discriminate the locations of each tire 121, 122, 123, and 124 through the magnitudes or phases of the pressure signals generated from the pressure gauges 140 that are each mounted at the plurality of tires 121, 122, 123, and 124 in the TPMS and improve the reliability of the location distinction.

Further, the tire location distinction device 100 according to the preferred embodiment of the present invention can discriminate the locations of the tires 121, 122, 123, and 124, without using the additional apparatus for the location distinction of the tires 121, 122, 123, and 124 in the TPMS.

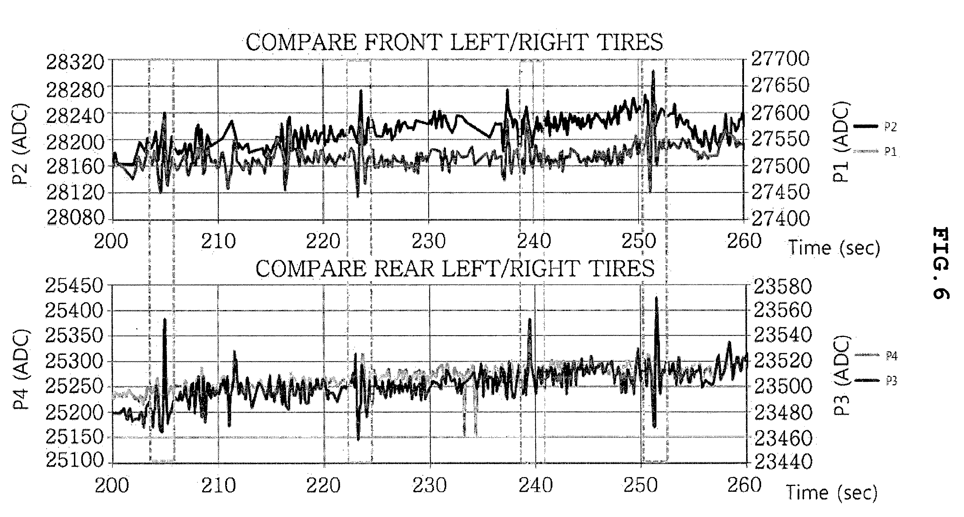

FIG. 6 is a graph showing a pressure change of tires in the location distinction method of TPMS according to the preferred embodiment of the present invention. Here, FIG. 6 shows a trend of the pressure change of the pressure signals P1, P2, P3, and P4 of each tire according to curves of a road surface measured when the vehicle in which an interval s between the front/rear tires shown in FIG. 4 is 2.6 m is driven at 30 km/h or 60 km/m. In this case, a time difference between the front/rear tires is 312 mmsec or 156 mmsec.

It can be appreciated from FIG. 6 that the pressure signals P1 and P2 indicate a similar phase difference and the pressure signals P3 and P4 indicate a similar phase difference at the same time.

Therefore, it can be appreciated that the pressure signals P1 and P2 of the front tires of a vehicle indicate the similar pressure change to each other and the pressure signals P3 and P4 of the rear tires of a vehicle indicate the pressure signals similar to each other.

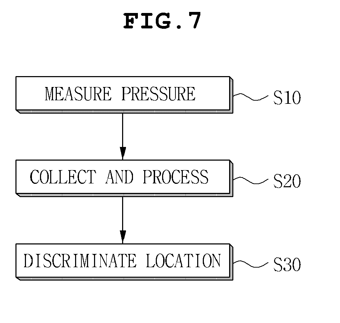

FIG. 7 is a flow chart showing a location distinction method of the TPMS according to a preferred embodiment of the present invention.

Referring to FIG. 7, the location distinction method of the TPMS according to the preferred embodiment of the present invention includes measuring a pressure (S10), collecting and processing pressure signals (S20), and discriminating locations (S30).

The location distinction method of the TPMS according to the preferred embodiment of the present invention relates to the location distinction method for the tire location distinction device 100 according to the preferred embodiment of the present invention and the same components thereof are denoted by the same reference numerals and the overlapping description thereof will be omitted if possible.

Hereinafter, referring to FIGS. 1 to 11, the preferred embodiment of the present invention that is the location distinction method of the TPMS will be described in more detail.

Referring first to FIGS. 1 to 7, the measuring of the pressure (S10) measures the internal pressure of the plurality of tires 121, 122, 123, and 124 mounted in the vehicle 110 by the pressure gauges 140, respectively.

Here, the tires 121, 122, 123, and 124 may be mounted in a body of the vehicle 110 and for example, may be mounted at the front, rear, left, and right tires of the vehicle 110, respectively.

In addition, referring to FIGS. 1 and 3, the pressure gauge 140 is provided in plural and mounted at the plurality of tires 121, 122, 123, and 124, respectively. Here, the tires 121, 122, 123, and 124 include the wheels 130.

In this case, the pressure gauges 140 each measure the internal air pressure of the tires 121, 122, 123, and 124, respectively, that are mounted the front, rear, left, and right of the vehicle 110. Here, the internal pressure of each tire 121, 122, 123, and 124 is changed according to the curves of the road surface R during a driving of a vehicle.

Further, the pressure gauge 140 may be configured of a TPMS sensor module that includes the pressure sensor 143 measuring the pressure and the transmitting unit 144 transmitting the pressure signals of the pressure sensor 143.

Referring to FIGS. 1 and 7, in the collecting and processing of the pressure signals (S20), the operation unit 160 receives and operates the pressure signals from the pressure gauges 140.

Here, referring to FIG. 3, the operation unit 160 includes the receiving unit (not shown) that receives the pressure signal transmitted from the transmitting unit 144 of the pressure gauge 140.

Further, referring to FIG. 1, the operation unit 160 collects and processing each pressure signal transmitted from the plurality of pressure gauges 140 that are mounted at the front, rear, left, and right tires 121, 122, 123, and 124, respectively.

Referring to FIGS. 1 and 7, in the discriminating of the locations (S30), the operation unit 160 compares the magnitudes or phases of the collected pressure signals to discriminate the locations of the tires 121, 122, 123, and 124.

Further, the discriminating of the locations (S30) includes grouping the front/rear tires and discriminating the front/rear tires (locations). In addition, the discriminating of the locations (S30) further includes grouping left/right tires and discriminating first left/right tires (locations).

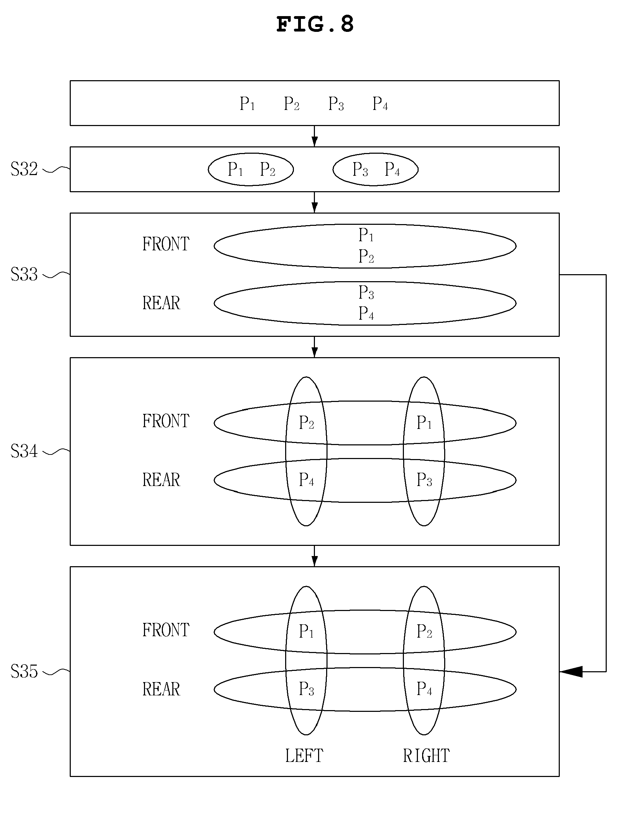

FIG. 8 is a flow chart showing the discriminating of the locations in the location distinction method of the TPMS according to the preferred embodiment of the present invention.

Referring first to FIG. 8, in the grouping of the front/rear tires (S32), the operation unit 160 groups the pressure signals having the high similarity among the pressure signals. Here, in the pressure of the plurality of tires 121, 122, 123, and 124 generated during a driving of a vehicle, the pressure of the front tires 121 and 122 and the pressure of the rear tires 123 and 124 have high similarity to each other. As a result, the pressure signals generated from the pressure gauges 140 that are located at the front left and right tires 121 and 122 are grouped and the pressure signals generated from the pressure gauges 140 that are located at the rear left and right tires 123 and 124 are grouped.

That is, the pressure signal P1 of the front left tire 121 and the pressure signal P2 of the front right tire 122 are highly likely to have the same phase at the same time. Further, since the pressure signal P3 of the rear left tire 123 and the pressure signal P4 of the rear right tire 124 are highly likely to have the same phase at the same time, the similarity between the signal waveforms may be increased.

Describing in more detail, the pressure signals having the high similarity may be grouped by the values of the pressure signals collected from the pressure gauges 140 that are located at each tire 121, 122, 123, and 124. Referring first to FIG. 6, as one method for discriminating the similarity between the signals, it can be appreciated that when the sign of the values obtained by multiplying the pressure signals by each other for each time period is positive, the similarity between the signals is high and when the sign thereof is negative, the similarity between the signals is low.

For example, when the values of the pressure signal P1 and the pressure signal P2 have the same phase, the similarity of the phase difference between the signals is high. Therefore, the values of the pressure signal P1 and the pressure signal P2 are highly likely to indicate the same sign value and thus, the sign of the values obtained by multiplying the pressure signal P1 and the pressure signal P2 by each other is highly likely to be positive.

Further, when the values of the pressure signal P1 and the pressure signal P3 have different phases, the similarity of the phase difference between the signals is low. Therefore, the values of the pressure signal P1 and the pressure signal P3 are highly likely to indicate the sign value that is not the same and thus, the sign of the values obtained by multiplying the pressure signal P1 and the pressure signal P3 by each other is highly likely to be negative.

Therefore, the pressure signals having the similarity among the pressure signals P1, P2, P3, and P4 may be grouped by discriminating the sign of the values obtained by multiplying the pressure signals by each other for each time period.

In addition, as another method for discriminating the similarity between the signals, it may be discriminated that as the relative/absolute sizes of the values obtained by summing the pressure signals with each other for each time period are large, the similarity between the signals is high and as the relative/absolute sizes thereof are small, the similarity between the signals is low.

For example, when the values of the pressure signal P1 and the pressure signal P2 have the same phase, the similarity of the phase difference between the signals is high. Therefore, the values of the pressure signal P1 and the pressure signal P2 are highly likely to indicate the same sign value and thus, the relative/absolute sizes of the values obtained by summing the pressure signal P1 and the pressure signal P2 with each other are large.

Further, when the values of the pressure signal P1 and the pressure signal P3 have different phases, the similarity of the phase difference between the signals is low. Therefore, the values of the pressure signal P1 and the pressure signal P3 are highly likely to indicate the same sign value and thus, the relative/absolute sizes of the values obtained by summing the pressure signal P1 and the pressure signal P3 with each other are small.

Therefore, the pressure signals having the similarity among the pressure signals P1, P2, P3, and P4 may be grouped by discriminating the relative/absolute sizes of the values obtained by summing the pressure signals by each other for each time period.

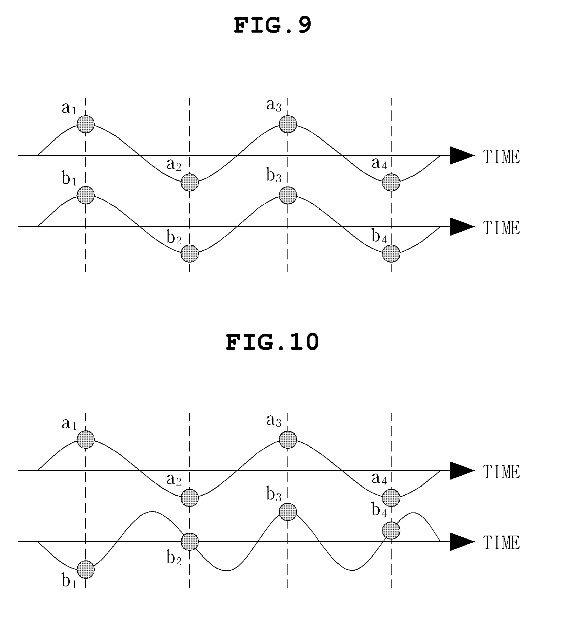

FIG. 9 is a graph showing a case in which the similarity between the pressure signals is high in the location distinction method of TPMS according to the preferred embodiment of the present invention and FIG. 10 is a graph showing a case in which the similarity between the pressure signals is low in the location distinction method of TPMS according to the preferred embodiment of the present invention.

Further, referring to FIGS. 9 and 10, as another method for discriminating the similarity between the signals, the following Equation 1 for analyzing the similarity between the pressure signals may be used. Here, when one of two compared pressure signals is a, another one of the compared pressure signals is b, and the number of pressure signals for all or a part of the time periods is N, a correlation coefficient r for pressure signals a (al, a2, a3, a4,...) and b (b1, b2, b3, b4, ...) may be obtained by the following Equation 1.

$$r = \frac{\sum_{i=1}^{N}(a_i - \overline{a})(b_i - \overline{b})}{\sum_{i=1}^{N}(a_i - \overline{a})^2 \sum_{i=1}^{N}(b_i - \overline{b})^2}, \qquad \overline{a} = \frac{1}{N}\sum_{i=1}^{N}a_i,$$

$$\overline{b} = \frac{1}{N}\sum_{i=1}^{N}b_i \qquad \ldots \text{Equation 1}$$

The above Equation 1 obtains the increment values of each signal based on an average value and the increment value is summed for the time periods to discriminate the similarity between the signals.

Further, referring to FIG. 7, when the similarity between the signals is high, since the signals mostly occupy the product of the increment values having the same sign of each signal (a1,a2,a3,a4,..) and (b1,b2,b3,b4,..), a value of the sum is larger and larger and the value approximates 1 when the sum of the results for all the time periods is obtained. In this case, the correlation coefficient r may be converged to 1. Here, referring to FIG. 1, for example, the pressure signals P1 and P2 are generated from the pressure gauges 140 mounted at the tires 121 and 122 that are located at the front of a vehicle and thus, may have the high similarity to each other, such that the correlation coefficient r of the pressure signals P1 and P2 may be converged to 1. In addition, for example, the pressure signals P3 and P4 are generated from the pressure gauges 140 that are mounted at the tires 123 and 124 located at the rear of a vehicle and therefore, may have the high similarity to each other, such that the correlation coefficient r of the pressure signals P1 and P2 may be converged to 1.

Meanwhile, referring to FIG. 8, when the similarity between the signals is low, since the product of the increment values having the same sign of each signal (a1,a2,a3,a4,..) and (b1,b2,b3,b4,..) and the product of the increment values having different signs are mixed, the value approximates 0 when the sum of the results for all the time periods is obtained. In this case, the correlation coefficient r may be converged to 0.

Here, referring to FIG. 1, for example, the pressure signals P1 and P3 are generated from the pressure gauges 140 mounted at the tires 121 and 122 that are located at the left of a vehicle and thus, may have the low similarity to each other, such that the correlation r of the pressure signals P1 and P2 may be converged to 0. In addition, for example, the pressure signals P2 and P4 are generated from the pressure gauges 140 that are mounted at the tires 122 and 124 located at the right of a vehicle and therefore, may have the high similarity to each other, such that the correlation coefficient r of the pressure signals P1 and P2 may be converged to 0.

Therefore, the pressure signals having the similarity among the pressure signals P1, P2, P3, and P4 may be grouped by discriminating the similarity between the signals using the correlation coefficient r obtained by the above Equation 1.

Consequently, the pressure signals P1 and P2 of the front left and right tires 121 and 122 may be grouped as the similar groups and the pressure signals P3 and P4 of the rear left and right tires 123 and 124 may be grouped as the similar groups.

Referring to FIGS. 1 and 8, in the discriminating of the front/rear tires (S33), the locations of the front/rear tires of the group of the pressure signals P1 and P2 and the group of the pressure signals P3 and P4 that are grouped as similar groups are discriminated.

Referring first to FIGS. 1, 4, and 6, when analyzing the similarity between the signals in consideration of the time delay + t and -t among the pressure signals P1 and P3, the pressure signals P1 and P4, the pressure signals P2 and P3, and the pressure signals P2 and P4, it can be appreciated that the similarity is large in the specific combinations.

In this case, the time delay t may be obtained from the following Equation 3 when a velocity of a vehicle is defined as v and an interval between the front/rear tires is defined as s.

$$t = s/v \ldots \text{Equation } 3$$

In this case, when the sign of the time delay t and the value of the similarity between the signals are detected, the front/rear tire locations of each tire 121, 122, 123, and 124 can be discriminated.

In addition, the time of the similar groups of the pressure signals P3 and P4 of the rear left and right tires 123 and 124 is more delayed by t than that of the similar groups of the pressure signals P1 and P2 of the front left/right tires 121 and 122, such that it can be appreciated that the similar groups of the pressure signals P1 and P2 are located at the front tire and the similar groups of the pressure signal P3 and the pressure signal P4 are located at the rear tire.

Referring to FIGS. 1 and 8, in the grouping of the left and right tires (S34), when comparing the pressure signal P1 with the pressure signals P3 and P4 under the same location condition in consideration of the time delay by the operation unit, it can be appreciated that the similarity between the pressure signals P1 and P3 generated from the pressure gauges 140 located at the left tires 121 and 123 is higher than that of the pressure signals P1 and P4 generated from the pressure gauges 140 located at the right tires 122 and 124.

Here, considering the time delay in the pressure signals P3 and P4 of the tires 123 and 124 located at the rear tire of the vehicle 110, it is possible to measure the air pressure of each tire 121 and 123, respectively, when the front left tire 121 and the rear left tire 123 are each located at the same location and the air pressure of each tire 122 and 124 when the front right tire 122 and the rear right tire 124 are located at the same location, respectively.

Therefore, the pressure signals P1 and P3 of the left tires 121 and 123 of the vehicle 110 are highly likely to indicate the similar signal change and thus, the pressure signals P1 and P3 may be grouped as the similar groups for the left and right discrimination.

Further, the pressure signals P2 and P4 of the right tires 122 and 124 of the vehicle 110 are highly likely to indicate the similar signal change and thus, the pressure signals P2 and P4 may be grouped as the similar groups for the left and right discrimination.

Here, the more detailed method for discriminating the similarity between the signals may be determined as the same method as the methods for discriminating similarity described in the grouping of the front/right tires (S32) and the overlapping description thereof may be omitted.

In the determining of the first left/right tires (S35), the group of the pressure signals P1 and P3 and the left and right generation locations of the pressure signals P2 and P4 of the pressure gauges 140 that are mounted at the tires 121, 122, 123, and 124 are determined.

In this case, the locations of the left and right tires are discriminated by comparing the pressure signals with the signals of motion sensors G1 and G2 mounted in the vehicle and the motion sensors G1 and G2 may be, for example, the vertical acceleration sensors.

Here, the vertical acceleration sensors are mounted at the left and right tires of the vehicle, respectively, to generate the acceleration signals. In this case, since the similarity is present between the changes in pressure of the tires 121, 122, 123, and 124, the change in load due to the vertical vibration of a vehicle may discriminate whether any of the left and right pressure signals is a left or right signal by the similarity comparison when comparing the tire pressure signals with the acceleration signals of the vertical acceleration sensors.

Consequently, the left and right generation locations of the pressure signals generated from each pressure gauge 140 is discriminated by comparing the acceleration signals with the group of the pressure signals P1 and P3 and the group of the pressure signals P2 and P4 and thus, the locations of the left and right tires 121, 122, 123, and 124 at which each pressure gauge 140 is mounted can be discriminated. Further, when for only one of the group of the pressure signals P1 and P3 and the group of the pressure signals P2 and P4, the left and right discrimination is performed, for the remaining, the left and right may be automatically discriminated.

As described above, the tire location distinction method of the TPMS according to the preferred embodiment of the present invention can easily discriminate the locations of each tire 121, 122, 123, and 124 through the magnitudes or phases of the pressure signals generated from the pressure gauges 140 that are each mounted in the plurality of tires 121, 122, 123, and 124 in the TPMS and improve the reliability of the location distinction.

Further, the tire location distinction method of the TPMS according to the preferred embodiment of the present invention can discriminate the locations of the tires 121, 122, 123, and 124, without using the additional apparatus for the location distinction of the tires 121, 122, 123, and 124 in the TPMS.

The preferred embodiments of the present invention can facilitate the location distinction and improve the reliability.

Further, the preferred embodiments of the present invention do not use the additional apparatus for discriminating the locations of the tires, thereby saving costs.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention. Accordingly, any and all modifications, variations or equivalent arrangements should be considered to be within the scope of the invention, and the detailed scope of the invention will be disclosed by the accompanying claims.

**Claims**

1. A tire location discrimination device, comprising:

   a plurality of pressure gauges each measuring internal pressure of a plurality of tires; and
   an operation unit receiving and processing pressure signals each generated from the plurality of pressure gauges, respectively, according to curves of a road surface,
   wherein signals values or phase differences of the pressure signals are compared with each other by the operation unit to discriminate the tire locations.

2. The tire location discrimination device as set forth in claim 1, wherein the pressure gauge is configured of a TPMS sensor module.

3. The tire location discrimination device as set forth in claim 1, wherein the pressure gauge includes:

   a pressure sensor measuring the pressure; and
   a transmitting unit transmitting the pressure signals of the pressure sensors.

4. The tire location discrimination device as set forth in claim 1, wherein the operation unit compares similarity between the pressure signals at the same time to discriminate locations of front and rear wheels of the tires.

5. The tire location discrimination device as set forth in claim 4, wherein the operation unit groups as similar groups the pressure signals in which a sign of values obtained by multiplying the pressure signals by each other is positive to discriminate the locations of the front and rear wheels of the tires.

6. The tire location discrimination device as set forth in claim 4, wherein the operation unit groups as similar groups the pressure signals in which relative/absolute sizes of a sum of values obtained by multiplying the pressure signals by each other are large to discriminate the locations of the front and rear wheel of the tires.

7. The tire location discrimination device as set forth in claim 4, wherein the operation unit compares the similarity between the pressure signals in consideration of a time delay between the front and rear wheels of the tires to discriminate the locations of the left and right wheels of the tire.

8. The tire location discrimination device as set forth in claim 7, wherein the operation unit compares at least one of the pressure signals with signals of motion sensors mounted in a vehicle to discriminate the at least one tire location and the locations of the pressure gauges from which the remaining pressure signals are generated, thereby discriminating the locations of the remaining tires.

9. The tire location discrimination device as set forth in claim 8, wherein the motion sensor is configured of an acceleration sensor measuring acceleration signals corresponding to motions of the tires.

10. A tire location distinction method, comprising:

    measuring, by a plurality of pressure gauges, respectively, internal pressure of a plurality of tires;
    collecting and processing pressure signals generated from the plurality of pressure gauges, respectively, according to curves of a road surface; and
    comparing, by an operation unit, magnitudes or phases of the pressure signals with each other to discriminate the locations of the tires.

11. The tire location distinction method as set forth in claim 10, wherein the discriminating of the locations of the tires includes:

    grouping, by the operation unit, as a plurality of similar groups signals having high similarity of the pressure signals at the same time; and
    comparing a time delay between front and rear wheels between the plurality of similar groups at the same time to discriminate locations of front and rear wheels of the tires.

12. The tire location distinction method as set forth in claim 11, wherein in the grouping, pressure signals in which a sign of values obtained by multiplying the pressure signals by each other is positive are grouped as similar groups.

13. The tire location distinction method as set forth in claim 11, wherein in the grouping, the pressure signals in which relative/absolute sizes of a sum of values obtained by multiplying the pressure signals by each other are large are grouped as the similar groups.

14. The tire location distinction method as set forth in claim 11, wherein the discriminating of the locations of the tires includes:

    grouping, by the operation unit, pressure signals having high similarity among the pressure signals in consideration of time differences between front and rear wheels; and
    comparing, by the operation unit, the plurality of similar groups with signals of acceleration sensors or angular velocity sensors to discriminate locations of left/right wheels of the tires.

15. The tire location distinction method as set forth in claim 14, wherein in the grouping, the pressure signals in which a sign of values obtained by summing the pressure signals by each other is positive are grouped as the similar groups.

16. The tire location distinction method as set forth in claim 14, wherein in the grouping, the pressure signals in which relative/absolute sizes of values obtained by multiplying the pressure signals by each other are grouped as the similar groups.

17. The tire location distinction method of claim 14, wherein in the discriminating of the locations of the tires, the operation unit compares at least one of the pressure signals with signals of motion sensors mounted in a vehicle to discriminate the location of at least one tire and automatically discriminate locations of the pressure gauges from which the remaining pressure signals are generated, thereby discriminating the locations of the remaining tires.

18. The tire location distinction method of claim 17, wherein the motion sensor is configured of an acceleration sensor measuring acceleration signals corresponding to motions of the tires.

19. The tire location distinction method of claim 10, wherein the pressure gauge is configured of a TPMS sensor module.

**20.** A tire location distinction method, comprising:

measuring, by a plurality of pressure gauges, respectively, internal pressure of a plurality of tires;
collecting and processing pressure signals each generated from the plurality of pressure gauges, respectively, according to curves of a road surface;
performing grouping to discriminate signals having high similarity between the pressure signals as a location of a front wheel or a rear wheel of the tires by allowing an operation unit to compare magnitudes and phases of the pressure signals at the same time and to discriminate signals having high similarity between the pressure signals as a location of a left wheel or a right wheel by allowing the operation unit to compare magnitudes or phases of the pressure signals in a time difference between the front and rear wheels; and
comparing at least one of the pressure signals with signals of motion sensors mounted in a vehicle to discriminate a location of at least one tire and automatically discriminate locations of the remaining pressure signals.

# FIG.1

# FIG.2

140

130

121

# FIG.3

# FIG.4

# FIG.5

# FIG. 6

# FIG.7

MEASURE PRESSURE — S10

↓

COLLECT AND PROCESS — S20

↓

DISCRIMINATE LOCATION — S30

# FIG.8

P₁    P₂    P₃    P₄

S32 — P₁ P₂    P₃ P₄

S33 —
FRONT    P₁ P₂
REAR    P₃ P₄

S34 —
FRONT    P₂    P₁
REAR    P₄    P₃

S35 —
FRONT    P₁    P₂
REAR    P₃    P₄
LEFT    RIGHT

# FIG.9

# FIG.10

Europäisches
Patentamt

European
Patent Office

Office européen
des brevets

## EUROPEAN SEARCH REPORT

**Application Number**

EP 12 18 3935

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 278 363 B1 (BEZEK CRAIG A [US] ET AL) 21 August 2001 (2001-08-21) | 1-4, 7-11,14, 17-20 | INV. B60C23/04 |
| A | * column 19, line 56 - column 21, line 9 * * figures 1,8,19-25 * ----- | 5,6,12, 13,15,16 | |

TECHNICAL FIELDS
SEARCHED (IPC)

B60C

The present search report has been drawn up for all claims

| Place of search | Date of completion of the search | Examiner |
|---|---|---|
| Munich | 28 June 2013 | Billen, Karl |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 12 18 3935

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2013

| Patent document cited in search report | | Publication date | Patent family member(s) | Publication date |
|---|---|---|---|---|
| US 6278363 | B1 | 21-08-2001 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120070031

- US 6725712 B